# EUROPÄISCHE PATENTSCHRIFT

(11) **EP 0 519 036 B1**
(45) Veröffentlichungstag und Bekanntmachung des Hinweises auf die Patenterteilung: **19.07.1995**
(21) Anmeldenummer: 92901847.1
(22) Anmeldetag: 23.12.1991
(51) Int. Cl.: E03D 5/012, E03F 1/00

(54) **SPÜLKLOSETTANLAGE, INSBESONDERE FÜR FAHRZEUGE**
FLUSH TOILET, IN PARTICULAR FOR VEHICLES
WATER-CLOSET, EN PARTICULIER POUR VEHICULES

(30) Priorität: 07.01.1991 AT 16/91
(43) Veröffentlichungstag der Anmeldung: 23.12.1992
(73) Patentinhaber: STABEG Apparatebaugesellschaft m.b.H., A-1140 Wien (AT)
(72) Erfinder: SALANSKY, Werner, A-1140 Wien (AT)
(74) Vertreter: Torggler, Paul, Dr.
(86) Internationale Anmeldenummer: AT9100137
(87) Internationale Veröffentlichungsnummer: WO9212299

(56) Entgegenhaltungen:
- EP-A- 0 306 366
- FR-A- 480 873
- FR-A- 2 256 292
- US-A- 3 566 415
- US-A- 4 672 690

## Beschreibung

Die Erfindung bezieht sich auf eine Spülklosettanlage, insbesondere für Fahrzeuge, mit einer Klosettmuschel, einer Spülung, einem Fallrohr, einer oberen und einer unteren Verschlußklappe, die einen Zwischenbehälter abgrenzen, und vorzugsweise einem Sammelbehälter für Fäkalien, wobei an den Zwischenbehälter eine Druckluftleitung angeschlossen ist.

Nach dem bekannten Stand der Technik sind im Eisenbahnbetrieb die WCs in den Reisezugwagen mit einer über ein Pedal betätigbaren Klappe versehen. Durch Öffnen der Klappe werden die Abfälle während der Fahrt über das Fallrohr ins Freie befördert. Da bei höheren Geschwindigkeiten vor allem bei Zugsbegegnungen im Tunnel starke Druckstöße entstehen, die dem Auswurf des Abfalls entgegenwirken, ist es als nachteilig anzusehen, daß die bekannten Reisezugwagen keine druckdichte WC-Anlage aufweisen.

Aus der US-PS 1 789 844 ist eine Spülklosettanlage bekannt, die im Fallrohr unterhalb der Klosettmuschel zwei Verschlußklappen aufweist, die einen Zwischenbehälter abgrenzen. Bei der Betätigung der Spülung bzw. bei der Entleerung der Klosettmuschel werden die Klappen nacheinander geöffnet, sodaß die Klosettmuschel nach außen ständig abgeschlossen ist.

Aus der FR-A-480 873 ist ein WC für Schiffe bekannt, das sich unterhalb des Wasserspiegels befindet. Es weist einen Zwischenbehälter auf, in dem ein Überdruck aufgebaut wird. Der Überdruck im Zwischenbehälter dient dazu, die Auslaufklappe gegen den Wasserdruck zu öffnen.

Ein weiteres Problem, das bei Spülklosettanlagen in Fahrzeugen auftritt, ist, daß der Vorrat an Spülflüssigkeit naturgemäß beschränkt ist. Des weiteren soll, falls die Fäkalien einem Sammelbehälter zugeführt werden, das Gesamtvolumen von Abfällen und Spülflüssigkeit möglichst begrenzt sein.

Aufgabe der Erfindung ist es, eine Spülklosettanlage der eingangs erwähnten Art dahingehend zu verbessern, daß diese mit einem Minimum an Spülflüssigkeit betrieben werden kann.

Die erfindungsgemäße Aufgabe wird dadurch gelöst, daß die Verschlußklappen über Pneumatikzylinder od.dgl. betätigbar sind. Die untere Klappe wird während des Druckaufbaus im Zwischenbehälter vom Pneumatikzylinder geschlossen gehalten.

Es ist bekannt, in einem Zwischenbehälter der oben und unten durch je einen druckdichten Schieber abgeschlossen ist, einen Überdruck zu erzeugen. In der Praxis erwies sich allerdings die Verwendung von Schiebern als problematisch, da sie von Fäkalienresten verschmiert und bei der Spülung auch nicht gereinigt wurden. Nach längerer Betriebsdauer war auch die notwendige Dichtheit nicht mehr gegeben.

Der Verwendung von Klappen stand entgegen, daß man befürchtete, daß der im Zwischenbehälter erzeugte Überdruck eine der Klappen vorzeitig öffnen könnte.

Erfindungsgemäß hat sich jedoch gezeigt, daß, wenn der Überdruck im Zwischenbehälter nicht zu hoch ist und die untere Verschlußklappe möglichst klein gehalten wird, eine ausreichende Abdichtung des Zwischenbehälters gewährleistet ist. Des weiteren führt ein eventuelles frühzeitiges Öffnen der unteren Klappe zwar zu einem Abfallen des Drucks im Zwischenbehälter und somit geht der erfindungsgemäße Effekt des verbesserten Fäkalientransportes verloren. Es treten jedoch keine Schäden an der Vorrichtung an sich auf und es kommt zu keinen unangenehmen Nebenwirkungen für die sich der erfindungsgemäßen Spülklosettanlage bedienenden Person.

Der Überdruck im Zwischenbehälter beträgt vorteilhaft zwischen 0,5 und 1 bar.

Die untere Verschlußklappe ist vorzugsweise kleiner als die obere Verschlußklappe, damit eventuell in die Klosettmuschel gefallene größere Gegenstände nicht in den Sammelbehälter kommen.

Um den Transport der Fäkalien von der Klosettmuschel in den Zwischenbehälter zu erleichtern, ist in einem bevorzugten Ausführungsbeispiel der Erfindung vorgesehen, daß mittels der Steuerung im Zwischenbehälter ein Vakuum erzeugt und darauf die obere Klappe geöffnet wird.

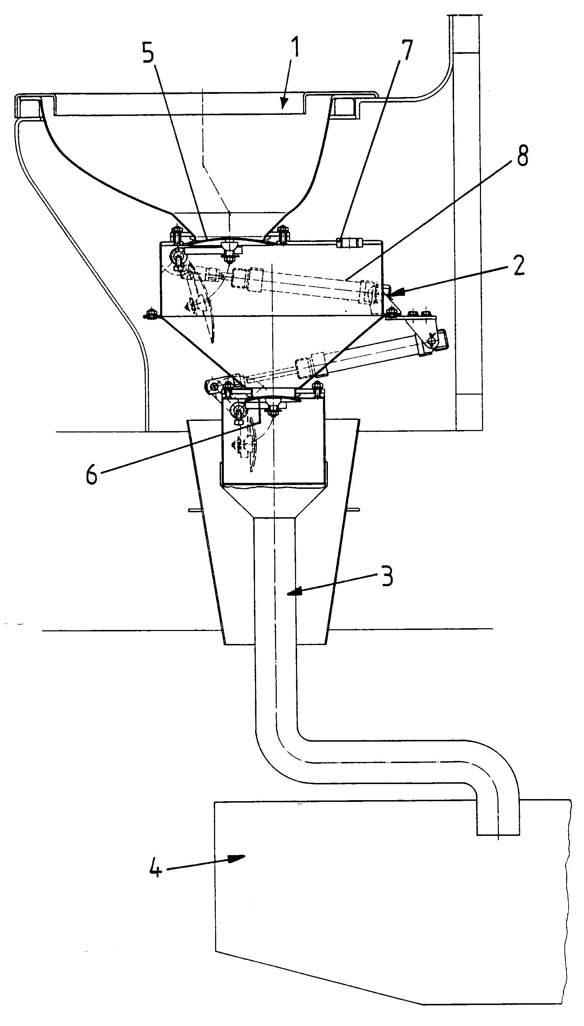

Nachfolgend wird ein Ausführungsbeispiel der Erfindung anhand der Figuren der beiliegenden Zeichnung eingehend beschrieben.

Die Figur der Zeichnung zeigt schematisch eine erfindungsgemäße Spülklosettanlage im Schnitt.

Wie aus der Figur der Zeichnung ersichtlich, handelt es sich bei der erfindungsgemäßen Spülklosettanlage um eine geschlossene WC-Anlage mit einer Klosettmuschel 1, einem Zwischenbehälter 2 und einem Fallrohr 3, das zu einem Sammelbehälter 4 führt.

Die Klosettmuschel 1 wird von einer Klappe 5 abgeschlossen. Die Klappe 5 grenzt die Klosettmuschel 1 gegenüber den Zwischenbehälter 2 ab. Beim unteren Auslaß des Zwischenbehälters 2 befindet sich eine weitere Klappe 6, die einen kleineren Durchmesser aufweist als die Klappe 5. Die Klappen 5, 6 sind schwenkbar gelagert und mittels doppelwirkender Pneumatikzylinder 8 betätigbar.

Die zu entsorgenden Fäkalien in der Spülmuschel 1 werden durch eine Pumpenspülung zur Klappe 5 befördert. Diese wird gleichzeitig oder knapp davor geöffnet und die Fäkalien gelangen in den Zwischenbehälter 2.

Die benötigte Wassermenge beträgt nur 0,3 l.

Anschließend wird die Klappe 5 geschlossen und im Zwischenbehälter 2 über einen Luftanschluß 7 ein Überdruck erzeugt. Dann wird die Klappe 6 geöffnet und die Abfälle werden durch die Rohrleitung 3 in den Sammelbehälter 4 befördert.

Die Spülklosettanlage arbeitet mit einer elektropneumatischen Steuerung, welche im Bereich des WC-Ständers an einer Klappe 5,6 montiert ist, um für Servicearbeiten leicht erreichbar zu sein.

Die Spülung der geschlossenen WC-Anlage wird durch Drücken eines Tasters aktiviert. Der Impuls der Drucktaste setzt den Spülvorgang der Steuerelektronik in Gang, wonach die Steuerventile aktiviert werden. Die Spüldauer der Anlage beträgt drei Sekunden, nach zwei Sekunden Spülung wird die obere Klappe 5 automatisch geöffnet.

Der im Zwischenbehälter 2 aufzubauende Überdruck beträgt vorteilhaft zwischen 0,5 und 1 bar.

Das Schließen der oberen Klappe 5 kann sowohl durch Druckluft als auch durch Federdruck erfolgen. Die obere Klappe 5 soll auch als Geruchsverschluß dienen.

Vor Beginn der Spülung kann auch im geschlossenen Zwischenbehälter 2 ein Vakuum erzeugt werden, um den Transport der Fäkalien von der Klosettmuschel 1 in den Zwischenbehälter 2 zu erleichtern.

Vorteilhaft erfolgt nach ca. 20 bis 30 WC-Betätigungen eine automatische Reinigung der Spülklosettanlage mit mehr als 0,3 l Wasser.

## Patentansprüche

1. Spülklosettanlage, insbesondere für Fahrzeuge, mit einer Klosettmuschel (1), einer Spülung, einem Fallrohr (3), einer oberen und einer unteren Verschlußklappe (5,6), die einen Zwischenbehälter (2) abgrenzen, und vorzugsweise einem Sammelbehälter (4) für Fäkalien, wobei an den Zwischenbehälter (2) eine Druckluftleitung (7) angeschlossen ist, dadurch gekennzeichnet, daß die Verschlußklappen (5,6) über Pneumatikzylinder (8) od.dgl. betätigbar sind.

2. Spülklosettanlage nach Anspruch 1, gekennzeichnet durch eine Steuerung mittels der, vorzugsweise bei Betätigung der Spülung, die obere Klappe (5) mittels eines Pneumatikzylinders (8) geöffnet wird, während die untere Klappe (6) von einem Pneumatikzylinder (8) geschlossen gehalten wird; anschließend die obere Klappe (5) vom Pneumatikzylinder (8) wieder geschlossen wird und während beide Klappen (5, 6) von den Pneumatikzylindern (8) geschlossen gehalten werden, Druckluft in den Zwischenbehälter (2) eingeblasen wird, so daß darin ein Überdruck entsteht und anschließend die untere Klappe (6) vom Pneumatikzylinder (8) geöffnet und wieder geschlossen wird, während die obere Klappe (5) geschlossen bleibt.

3. Spülklosettanlage nach Anspruch 2, dadurch gekennzeichnet, daß ein Überdruck von 0,5 - 1 bar im Zwischenbehälter (2) aufgebaut wird.

4. Spülklosettanlage nach Anspruch 1 und/oder 2, dadurch gekennzeichnet, daß die untere Klappe (6) kleiner als die obere Klappe (5) ist.

5. Spülklosettanlage nach Anspruch 2, dadurch gekennzeichnet, daß mittels der Steuerung im Zwischenbehälter (2) ein Vakuum erzeugt und darauf die obere Klappe geöffnet wird.

## Claims

1. Flush toilet installation, in particular for vehicles, with a toilet bowl (1), a flushing system, a down pipe (3), an upper and a lower closure flap (5, 6) which delimit an intermediate tank (2), and preferably a collecting tank (4) for faeces, wherein a compressed air line (7) is connected to the intermediate tank (2), characterised in that the closure flaps (5, 6) can be actuated by way of pneumatic cylinders (8) or the like.

2. Flush toilet installation according to Claim 1, characterised by a control arrangement by means of which, preferably when the flushing system is actuated, the upper flap (5) is opened by means of a pneumatic cylinder (8), whilst the lower flap (6) is kept closed by a pneumatic cylinder (8); then the upper flap (5) is closed again by the pneumatic cylinder (8) and whilst both flaps (5, 6) are kept closed by the pneumatic cylinders (8) compressed air is blown into the intermediate tank (2), so that a positive pressure is produced therein and then the lower flap (6) is opened by the pneumatic cylinder (8) and closed again, whilst the upper flap (5) remains closed.

3. Flush toilet installation according to Claim 2, characterised in that a positive pressure of 0.5 - 1 bar is built up in the intermediate tank (2).

4. Flush toilet according to Claim 1 and/or 2, characterised in that the lower flap (6) is smaller than the upper flap (5).

5. Flush toilet installation according to Claim 2, characterised in that by means of the control arrangement in the intermediate tank (2) a vacuum is produced and thereupon the upper flap is opened.

## Revendications

1. Installation de water-closet, en particulier pour véhicules, avec une cuvette de water-closet (1), une chasse d'eau, un tuyau de descente (3), un clapet de fermeture supérieur et un clapet de fermeture inférieur (5,6), qui délimitent un réservoir intermédiaire (2), et de préférence un réservoir collecteur (4) pour les matières fécales, une conduite d'air sous pression (7) étant reliée au réservoir intermédiaire (2), caractérisée en ce que les clapets de fermeture (5,6) sont actionnables par des cylindres pneumatiques (8) ou similaires.

2. Installation de water-closet selon la revendication 1, caractérisée par une commande au moyen de laquelle, de préférence lors de l'actionnement de la chasse, le clapet supérieur (5) s'ouvre au moyen d'un cylindre pneumatique (8), le clapet inférieur (6) étant maintenu fermé par un cylindre pneumatique ; ensuite, le clapet supérieur (5) se ferme à nouveau au moyen du cylindre pneumatique (8) et tandis que les deux clapets (5, 6) sont maintenus fermés par les cylindres pneumatiques (8), de l'air comprimé est insufflé dans le réservoir intermédiaire (2) de sorte qu'il se produit une surpression à l'intérieur de celui-ci et ensuite le clapet inférieur (6) s'ouvre au moyen du cylindre pneumatique (8) et se ferme à nouveau, le clapet supérieur (5) restant fermé,

3. Installation de water-closet selon la revendication 2, caractérisée en ce qu'une surpression de 0,5 à 1 bar est établie dans le réservoir intermédiaire.

4. Installation de water-closet selon la revendication 1 et/ou la revendication 2, caractérisée en ce que le clapet inférieur (6) est plus petit que le clapet supérieur (5).

5. Installation de water-closet selon la revendication 2, caractérisée en ce qu'au moyen de la commande un vide est produit dans le réservoir intermédiaire (2), et qu'ensuite le clapet supérieur est ouvert.
